# EUROPEAN PATENT SPECIFICATION

(11) **EP 1 751 927 B1**
(45) Date of publication and mention of the grant of the patent: **05.08.2009**
(21) Application number: 04734016.1
(22) Date of filing: 19.05.2004
(51) Int. Cl.: H04L 12/56, H04W 4/00

(54) **BIT RATE MAPPING**
BITRATEN-ABBILDUNG
MISE EN CORRESPONDANCE DE DEBIT BINAIRE

(43) Date of publication of application: 14.02.2007
(73) Proprietor: TELEFONAKTIEBOLAGET LM ERICSSON (publ), 164 83 Stockholm (SE)
(72) Inventor: KOPPLIN, Dirk, S-442 54 Ytterby (SE)
(74) Representative: Bergquist, Kjell Gunnar
(86) International application number: PCT/SE2004/000775
(87) International publication number: WO 2005/112371

(56) References cited:
- EP-A- 1 395 005
- WO-A-01/78328
- US-A1- 2002 132 611

## Description

### TECHNICAL FIELD

The invention relates to a method and a radio network, respectively, for adapting the GBR/MBR (Guaranteed Bit Rate/Minimum Bit rate) for data communication in the radio network.

The radio network comprises a piece of user equipment, a radio control device and an SGSN (Switching GPRS Support Node).

The invention also relates to a node of the type SGSN, or a node having a similar functionality.

### BACKGROUND ART

Due to the development of equipment for wireless transport of data, for example e-mail, many network operators are establishing such services for their customers. Future fields of use may be to acquire video sequences from an on-going sports event, for example a game of football. When a goal is scored, one may watch the event on, by way of example, a cell phone monitor.

Today, GPRS (Global Packet Radio Service) is used. Previous GPRS systems are called 2.5G (second and a half generation) and use GSM (Global System for Mobile communication) as its radio system. Now the operators are introducing 3G (third generation) where GPRS uses UMTS (Universal Mobile Telecommunications System) as its radio system. UMTS is faster than the older GSM, and has the support of many major telecommunications operators and manufacturers because it represents a unique opportunity to create a mass market for highly personalised and user-friendly mobile access to tomorrow's information society. UMTS will deliver pictures, graphics, video communications and other wideband information such as the ability to access the Internet, as well as voice and data, directly to people who can be on the move. UMTS builds on the capability of today's mobile technologies (like digital cellular and cordless) by providing increased capacity, data capability and a far greater range of services using an innovative radio access scheme and an enhanced, evolving core network.

In a network, the user equipment UE (for example a cell phone) is connected to an RNC (Radio Network controller) via a wireless connection. There may be more than one RNC in a wireless network. The RNC in question is in turn connected to a node of the type SGSN (Switching GPRS Support Node), a kind of switch which may select an appropriate node of the type GGSN (Gateway GPRS Support Node). The SGSN receives a set of QoS (Quality of Service) parameters for each UE for a given APN (Access Point Name) from an HLR (Home Location Register), a large database containing information about all subscribers, i.e. for a certain SIM (Subscriber Identification Module) card, a certain set of QoS parameters is acquired from the HLR for a given APN. The APN may comprise one or more services such as the Internet, and is connected to a GGSN.

The SGSN always receives QoS parameters from the HLR and also receives QoS parameters either from the UE via the RNC or from the APN via the GGSN. Only one specific set of QoS parameters is used for a specific context (a specific set-up), but many contexts may be set-up if there is a need for it.

The QoS parameters may for example comprise different traffic classes such as conversational, streaming and interactive. Each one of these traffic classes is assigned a GBR (Guaranteed Bit Ratio) and/or an MBR (Maximum Bit Ratio). Should the APN comprise several services, the GBR and MBR defined in the APN constitute the upper boundaries for the entire service offer of the APN, even if the individual services comprised in the APN should require different values for GBR and MBR.

There is a relation between the GBR and the MBR which may be expressed as GBR = MBR - re-sendings. This relation only exists at the RNC, not at the HLR. The HLR is on the other hand provided with a relationship concerning which GBR/MBR that is linked to a certain application or service.

As stated above, the SGSN may receive QoS parameters from the UE via the RNC. If the UE does not specify any special QoS for the service required from an APN offering at least two services, the QoS parameters acquired from the HLR will be used by the SGSN. The SGSN then sets up the context in a negotiation process between the SGSN and the RNC.

This may cause a conflict, as the GBR/MBR that are presented to the RNC by the SGSN in the negotiation process between the SGSN and the RNC may not be accepted by the RNC, for example due to a high degree of wireless traffic, or a generally low capacity for wireless transmissions. If the RNC does not accept the GBR/MBR that are used, the transmission in question is either buffered for a future possibility of transmission, or terminated.

If the SGSN receives QoS parameters from the APN via the GGSN, a context is set up using either the QoS parameters from the APN or the QoS parameters acquired from the HLR, the QoS comprising the lowest value for GBR/MBR is chosen. The conflict stated above may occur in the same way in this case, if the QoS parameters chosen for the context in question comprises a GBR/MBR that is not accepted by the RNC.

EP 1395005 relates to an implementation of streaming in a mobile communication network. In one case, not "fast start", the MBR (Maximum Bit Rate) and GBR (Guaranteed Bit Rate) are generally equal, and in one other case, "fast start", the MBR shall be higher than the GBR.

There is thus a problem concerning a possible conflict between the GBR/MBR granted to the SGSN from the HLR and the capacity of the RNC that is used.

### DISCLOSURE OF THE INVENTION

It is an object of the present invention to provide a method and a radio network for adapting the GBR/MBR to the capacity available at the RNC in question.

The problem is solved by means of a method as mentioned in the introduction, where the adaptation is used to comply to the highest capacity available at the radio network, which method comprises the steps: acquiring a predefined GBR to a component in the radio network and calculating an MBR using the GBR as input data, where a predefined algorithm is used for the calculation.

The problem is also solved by means of a radio network as mentioned in the introduction, where the radio network is arranged for adapting the GBR/MBR (Guaranteed Bit Rate/Minimum Bit rate) for data communication in the radio network in order to comply to the highest capacity available.

The problem is also solved by means of a node as mentioned in the introduction, where the node is arranged for calculating an MBR starting with a given GBR.

Preferred embodiments are disclosed in the independent claims.

A number of advantages are obtained by means of the present invention. Examples of such advantages are:
- The risk for a conflict between the GBR/MBR that is presented by the SGSN and the capacity of the radio is heavily reduced.
- If data is buffered due to a transmission error, the amount of buffered data is minimized.
- For an APN comprises several services with different requirements concerning MBR/GBR, a relationship between MBR and GBR is established
- The number of negotiation processes between the SGSN and the RNC is reduced.

### BRIEF DESCRIPTION OF THE DRAWINGS

The invention will be described below in connection with an example of a preferred embodiment and the enclosed drawings, where
Figure 1 is a schematic view of a mobile terminal contacting a base station; and
Figure 2 is a schematic overview of a system in which the invention can be applied.

### EMBODIMENTS

This invention constitutes an improvement in the field of wireless data networks, in particular wireless package data networks. In the following, a more detailed background to the invention will be disclosed in order to facilitate the understanding of the present invention.

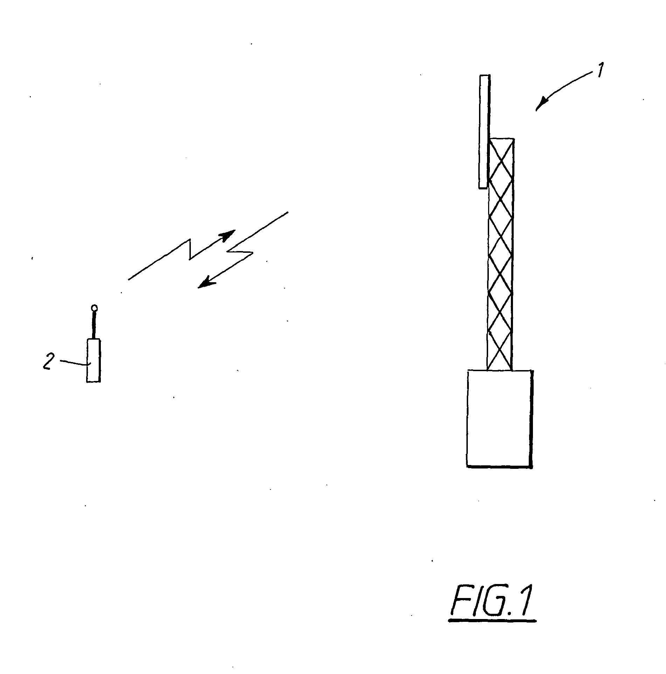

Due to the development of equipment for wireless transport of data, many network operators are establishing such services for their customers, such as the possibility to acquire video sequences from an on-going sports event, for example a game of football, when a goal is scored, and watch the event on a wireless monitor. With reference to Figure 1, a mobile base station 1 is contacted by a UE (User Equipment) 2 (for example a cell phone). When using GPRS (Global Packet Radio Service), data is sent in packages, and the operator then has the possibility to charge the user for the amount of data that is sent. Using this service, the line is either shared with other users, or only open when the packages are transmitted.

The introduction of 3G (third generation) wireless networks means that the service GPRS uses UMTS (Universal Mobile Telecommunications System) as its radio system.

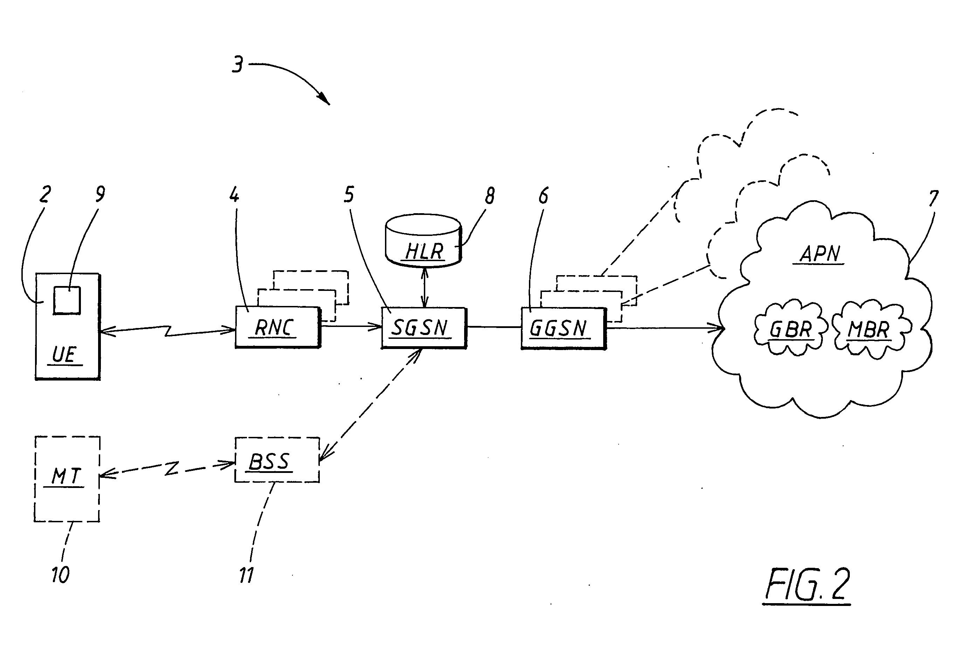

With reference now to Figure 2, the UE 2 is located in a radio network 3. The UE 2 contacts a base station comprising an RNC (Radio Network controller) 4 in the radio network 3, which is owned by one or more operators of which one operator is the one that the UE 2 is subscribed to. Note that it is schematically shown in Figure 2, but without reference signs, that more than one RNC 4 may be used in the radio network 3.

The RNC 4 in the radio network 3 is connected to a node of the type SGSN (Switching GPRS Support Node) 5, which works as a kind of switch which may select an appropriate node of the type GGSN (Gateway GPRS Support Node) 6. The SGSN 5 receives a set of QoS (Quality of Service) parameters for each UE 2 for a given APN (Application Node) 7 from an HLR (Home Location Register) 8, a large database containing information about all subscribers, i.e. for a certain UE 2, a certain set of QoS parameters is acquired from the HLR 8 for a given APN 7. The APN 7 may comprise one or more services such as the internet, and is connected to a GGSN 6. Note that it is schematically shown in Figure 2, but without reference signs, that there may be other GGSN:s in the radio network 3, connected to other APN:s.

Note that the elements shown in the radio network 3 are there to aid in the understanding of the invention, and a number of other, not shown, elements may be a part of the radio network 3.

The QoS parameters comprise
- Traffic class
- Delivery order (order of the data packages)
- Delivery of erroneous SDU (Service Data Unit)
- Maximum SDU size (Maximum size for a data package)
- Maximum bit rate for uplink
- Maximum bit rate for downlink
- Residual BER (Bit Error Rate)
- SDU error ratio (Data package error ratio)
- Transfer delay
- Traffic handling priority (Applicable for traffic classes having priorities, such as "interactive")
- Guaranteed bit rate for uplink
- Guaranteed bit rate for downlink

There are different traffic classes, for example conversational, streaming, interactive and background.

"Conversational" is a traffic class for real-time traffic, such as speech traffic, where it is important that all data reaches the receiver, and that the delay time is kept at a minimum. "Conversational" is associated with a certain GBR (Guaranteed Bit Rate) and a certain MBR (Maximum Bit Rate).

"Streaming" is a traffic class for music and video traffic, where it is important that the so-called jitter is kept at a minimum. With the term "jitter", the delay between each data packet is referred to. "Streaming" is associated with a certain GBR and a certain MBR.

"Interactive" is a traffic class for transfer of data files, for example e-mail and Internet files, where it is important that the data flow is as fast as possible. It does not matter if the data flow is variable with interruptions in this case. "Interactive" is associated with the QoS parameter "Traffic handling priority", where different priority classes are available. "Interactive" is associated with a certain MBR.

"Background" is the "Interactive" traffic class that has the lowest priority. "Background" is associated with a certain MBR.

Described more in detail, the SGSN 5 retrieves an IMSI (International Mobile Subscriber Identity) from the UE 2. The IMSI is incorporated in the UE 2, by way of example in a SIM (Subscriber Identification Module) card 9 which is detachably mounted in the UE 2. Then the SGSN 5 contacts the HLR 8, acquiring a set of QoS parameters that a specific subscriber, identified via the IMSI, may use for a specific APN 7. Thus, using the IMSI, the information that is valid for the UE 2 in question is provided to the SGSN 5.

Should the APN 7 comprise several services, the GBR and MBR defined in the APN 7 constitute the upper boundaries for the entire service offer of the APN 7, even if the several services comprised in the APN 7 should require different GBR/MBR.

As stated above, the GBR is included in the traffic classes streaming and conversational, while MBR is included in all the traffic classes mentioned.

According to the present invention, the MBR acquired from the QoS parameters is not used, but is calculated by the SGSN 5 from a given GBR. The MBR is calculated as
2^{x} < GBR ≤ 2^{(x+1)} 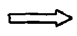 MBR = 2^{(x+1)} where x is an integer.

In other words, the MBR is calculated as the power of two that is equal to or closest above the GBR. The MBR is thus chosen from a fixed set of MBR values, where the MBR is a power of two, for example 2³ = 8, 2⁴ = 16, 2⁵ = 32, 2⁶ = 64 and 2⁷ =128. For example, if the GBR is 60, the MBR is calculated as MBR = 2⁶ = 64.

The given GBR that is provided to the SGSN 5 is comprised in the QoS that is supplied from the HLR 8. Alternatively, the given GBR may also be comprised in either the QoS that is supplied from the UE 2 via the RNC 4 or from the APN 7 via the GGSN 6. In either case, the GBR which has the lowest value is used, decreasing the risk for a conflict at the RNC 4.

If an MBR is calculated and is presented to the RNC 4 by the SGSN 5 in a negotiation process between the SGSN 5 and the RNC 4, preceding the data transmission, it is possible that the requested MBR is not accepted by the RNC 4. This non-acceptance may depend on the calculated MBR not complying with the capacity of the RNC 4. The RNC 4 indicates this fact to the SGSN 5, which then lowers the MBR to a predefined value, and then suggests this lowered value to the RNC. During this process, eventually an acceptable MBR will be presented to the RNC by the SGSN.

A further advantage provided by the present invention is that, as the difference between the GBR and the MBR is minimized, the system resources are spared. Should a connection be set up between the SGSN 5 and the RNC 4, and a transmission error occur, the data is either buffered at the RNC 4 or deleted. Should the data be buffered, it is beneficial if the amount of buffered data is as small as possible, as is provided by the present invention.

Above, a system according to 3G, using UMTS, has been described. Of course, the present invention is applicable for 2.5G, using GSM, as well. In Figure 2, this is indicated by the dotted boxes and arrows, where an MT (Mobile Terminal) 10 is connected to a BSS (Base Station System) 11. The BSS 11 is in turn connected to the SGSN 5. The invention is implemented in the 2.5G system in the same way as described for the 3G system.

The invention is not limited to what has been described above, but may vary within the scope of the appended claims. For example, the UE 2 may be arranged to supply an appropriate GBR to the SGSN 5, which GBR is depending on the service chosen by the user among those services available.

Further, the MBR may be calculated by another node, having a functionality that is similar to the SGSN 5, from a given GBR.

## Claims

1. Method for adapting the GRR/MRR, Guaranteed Bit Rate/Maximum Bit Rate ratio, for data communication in a radio network (3), comprising the steps:
providing a predefined GBR to a component (5) in the radio network (3); and
calculating, by said component, an MBR using the GBR as input data, where a predefined algorithm is used for the calculation, which minimizes the difference between the GBR and the MBR.

2. Method according to claim 1, **characterized in that** the predefined GBR is acquired from a set of QoS parameters.

3. Method according to claim 1, **characterized in that** the predefined GBR is depending on the service chosen by a user of the radio network (3).

4. Method according to any one of the claims 1-3, **characterized in that** the MBR is calculated as
2^{x} < GBR ≤ 2^{(x+1)} 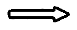 MBR = 2^{(x+1)} where x is an integer.

5. Method according to any one of the previous claims, **characterized in that** the radio network (3) is a 3G network, using UMTS (Universal Mobile Telecommunications System) as radio system.

6. Method according to any one of claims 1-4, **characterized in that** the radio network (3) is a 2.5G network, using GSM (Global System for Mobile communication) as radio system.

7. A node (5) in a radio network, the node (5) having the same functionality as an SGSN, Switching GPRS Support Node, node, said node (5) being arranged to calculate an MBR, Maximum Rit Rate, starting with a given GBR, Guranteed Bit Rate, by means of a pre-defined algorithm such that the difference between the GBR and the MBR is minimized.

8. Node (5) according to claim 7, **characterized in that** the node (5) is arranged to calculate the MBR as
2^{x} < GBR ≤ 2^{(x+1)} 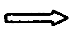 MBR = 2^{(X+1)} where x is an integer.

9. Node (5) according to any one of the claims 7-8, **characterized in that** the radio network (3) is a 3G network, arranged for the radio system UMTS, Universal Mobile Telecommunications System.

10. Node (5) according to any one of claims 7-8, **characterized in that** the radio network (3) is a 2.5G network, arranged for the radio system GSM, Global System for Mobile communication.

11. Node (5) according to any one of the claims 7-10, **characterized in that** the node (5) is an SGSN.

12. Radio network (3) comprising a node according to any one of the claims 7-11.

## Patentansprüche

1. Verfahrenzu m Anpassen desGBR/MBR-Verhältnisses, Garantie-Bitrate/Maximal-Bitrate-Verhältnis, für eine Datenkommunikationin einemFunknetzwerk (3) mit den Schritten:
Bereitstelleneiner vordefiniertenGBRan eine Komponente (5) in dem Funknetzwerk (3); und
Berechnendurchdie Komponenteeiner MBR unter Verwendungder GBR als Eingangsdaten, wobei ein vordefinierterAlgorithmus für die Berechnungverwendet wird, der die Differenz zwischender GBR und der MBR minimiert.

2. Verfahrennach Anspruch 1, **dadurch gekennzeichnet, dass** die vordefinierte GBR aus einem Satzvon QoS-Parametern erhalten wird.

3. Verfahrennach Anspruch 1, **dadurch gekennzeichnet, dass** die vor definierte GBR von dem Dienstabhängt, der von einem Benutzerdes Funknetzwerkes (3) ausgewähltwird.

4. Verfahrennacheinemder Ansprüchel-3, **dadurch gekennzeichnet, dass** die MBR berechnetwirdals
2^{x}<GBR≤2^{(x+1)} ⇒ MBR=2^{(x+1)}, wobeix eine Ganzzahl ist.

5. Verfahrennacheinem der vor angehen den Ansprüche, **dadurch gekennzeichnet, dass** das Funknetzwerk (3) ein 3G-Netzwerkis t , da s UMT S (UniversalMobile TelecommunicationsSystem) als Funksystemverwendet.

6. Verfahrennacheinem der Ansprüche 1-4, **dadurch gekennzeichnet, dass** das Funknetzwerk (3) ein 2.5G-Netzwerkist, das GSM (Global System for Mobile Communications) als Funksystemverwendet.

7. Knoten (5) in einem Funknetzwerk, wobei de r Knoten (5) die gleiche Funktionalität wie ein SGSN-Knoten, Schalt-GPRS-Unterstützungsknoten, aufweist, wobei der Knoten (5) angeordnetist, eine MBR, Maximal-Bitrate, die mit einergegebenenGBR, Garantie-Bitrate,beginnt,mittels einesvordefinierten Algorithmusderart z u berechnen, dass die Differenz zwischenderGBRundderMBR minimiertwird.

8. Knoten (5) nach Anspruch 7 , **dadurch gekennzeichnet, dass** der Knoten (5) angeordnet ist, die MBR zu berechnen, als
2^{x}<GBR≤2^{(x+1)} ⇒ MBR=^{2(x+1)}, wobeix eine Ganzzahl ist.

9. Knoten (5) nacheinem der Ansprüche 7-8, **dadurch gekennzeichnet, dass** das Funknetzwerk (3) ein 3G-Netzwerkist, das für das Funksystem UMTS, Universal MobileTelecommunications System, angeordnet ist.

10. Knoten (5) nacheinem der Ansprüche 7-8, **dadurch gekennzeichnet, dass** das Funknetzwerk (3) ein 2.5G-Netzwerkist, das für das Funksystem GSM, Global System for Mobile Communication, angeordnetist.

11. Knoten (5) nacheinem der Ansprüche 7-10, **dadurch gekennzeichnet, dass** der Knoten (5) ein SGSN ist.

12. Funknetzwerk (3) mit einem Knotennacheinem der Ansprüche7-11.

## Revendications

1. Procédé destiné à adapter le rapport GBR/MBR, ou rapport du débit binaire garanti au débit binaire maximum, pour la transmission de données dans un réseau radio (3), comprenant les étapes consistant à :
fournir un GBR prédéfini à un composant (5) dans le réseau radio (3) ; et
calculer, sur ledit composant, un MBR en utilisant le GBR en tant que donnée d'entrée, un algorithme prédéfini étant utilisé pour le calcul, qui minimise la différence entre le GBR et le MBR.

2. Procédé selon la revendication 1, **caractérisé en ce que** le GBR prédéfini est acquis à partir d'un ensemble de paramètres de QoS (Qualité de service).

3. Procédé selon la revendication 1, **caractérisé en ce que** le GBR prédéfini dépend du service choisi par un utilisateur du réseau radio (3).

4. Procédé selon l'une quelconque des revendications 1-3, **caractérisé en ce que** le MBR est calculé par :
2^{x} < GBR ≤ 2^{(x+1)} ⇒ MBR = 2^{(x+1)} où x est un entier.

5. Procédé selon l'une quelconque des revendications précédentes, **caractérisé en ce que** le réseau radio (3) est un réseau 3G utilisant l'UMTS (Système Universel de Télécommunication avec les Mobiles) en tant que système radio.

6. Procédé selon l'une quelconque des revendications 1-4, **caractérisé en ce que** le réseau radio (3) est un réseau 2.5G utilisant le GSM (Système Mondial de Télécommunication avec les Mobiles) en tant que système radio.

7. Noeud (5) dans un réseau radio, le noeud (5) ayant la même fonctionnalité qu'un noeud SGSN ou noeud de support GPRS de commutation, ledit noeud (5) étant conçu pour calculer un MBR, ou débit binaire maximum, à partir d'un GBR donné, ou débit binaire garanti, au moyen d'un algorithme prédéfini qui est tel que la différence entre le GBR et le MBR soit minimisée.

8. Noeud (5) selon la revendication 7, **caractérisé en ce que** le noeud (5) est conçu pour calculer le MBR par :
2^{x} < GBR ≤ 2^{(x+1)} ⇒ MBR = 2^{(x+1)} où x est un entier.

9. Noeud (5) selon l'une quelconque des revendications 7-8, **caractérisé en ce que** le réseau radio (3) est un réseau 3G conçu pour le système radio UMTS ou Système Universel de Télécommunication avec les Mobiles.

10. Noeud (5) selon l'une quelconque des revendications 7-8, **caractérisé en ce que** le réseau radio (3) est un réseau 2.5G conçu pour le système radio GSM, ou Système Mondial de Télécommunication avec les Mobiles.

11. Noeud (5) selon l'une quelconque des revendications 7-10, **caractérisé en ce que** le noeud (5) est un noeud SGSN.

12. Réseau radio (3) comprenant un noeud selon l'une quelconque des revendications 7-11.
